# EUROPEAN PATENT SPECIFICATION

(11) **EP 3 219 748 B1**
(45) Date of publication and mention of the grant of the patent: **26.05.2021**
(21) Application number: 17160124.8
(22) Date of filing: 09.03.2017
(51) Int. Cl.: C08K 3/04, C08K 5/136, C08K 5/50, F04B 43/08, F16K 7/04, C08L 27/16

(54) **FLUORORUBBER TUBE**
FLUORKAUTSCHUKROHR
TUBE DE CAOUTCHOUC FLUORÉ

(30) Priority: 16.03.2016 JP 2016052621
(43) Date of publication of application: 20.09.2017
(73) Proprietor: Sumitomo Rubber Industries, Ltd., Kobe-shi, Hyogo-ken 651-0072 (JP)
(72) Inventor: FUJIMOTO, Kentaro, Kobe-shi, Hyogo 651-0072 (JP); ISHIMARU, Takeshi, Kobe-shi, Hyogo 651-0072 (JP)
(74) Representative: Manitz Finsterwald Patent- und Rechtsanwaltspartnerschaft mbB

(56) References cited:
- EP-A1- 1 953 190
- EP-A1- 2 985 499

## Description

### [TECHNICAL FIELD]

The present invention relates to a fluororubber tube to be incorporated, for example, in a tube pump or a pinch valve for use.

### [BACKGROUND ART]

Tube pumps and pinch valves are known, for example, to include a flexible tube such as flexible tube made of a rubber or a soft plastic.

In such a tube pump and a pinch valve, a flow channel is defined by an inner surface of the tube, and only the inner surface of the tube contacts a fluid. Therefore, the flow channel can be always kept clean, for example, by changing the tube after use. This arrangement is effective for prevention of fluid cross-contamination and the like.

Further, the tube pump and the pinch valve can be advantageously used, for example, for transporting a slurry containing solid particles without clogging and a malfunction thereof.

Therefore, the tube pump and the pinch valve are widely used in a variety of fields such as of chemicals, semiconductors, foods and biotechnology.

When the tube pump is used, the tube is squeezed in one longitudinal direction. More specifically, a region of the tube is diametrically pressed to collapse a part of the internal flow channel of the tube and, in this state, the pressed region is moved in one longitudinal direction along the tube, whereby the fluid in the flow channel is fed out in that direction.

Therefore, it is important, in terms of the fluid transportability in the tube pump, that the tube of the tube pump can be promptly restored to its original state by its intrinsic resilience and restorability to thereby have a sufficient volume to contain a sufficient amount of fluid after the pressed region is moved to release the tube from the pressing.

On the other hand, the pinch valve is selectively brought into a closed state in which a part of the tube is diametrically pressed to collapse a part of the internal flow channel of the tube to close the flow channel, and an open state in which the tube is released from the pressing and restored to its original state by its intrinsic resilience and restorability to open the flow channel, whereby the closing/opening of the flow channel is controlled to inhibit or permit fluid flow.

Therefore, it is important, in terms of the responsiveness of the pinch valve, that the tube can be promptly restored to its original state by its intrinsic resilience and restorability to thereby open the flow channel after the tube is released from the pressing.

It is contemplated to use a tube of a fluororubber, which is soft, chemically stable and highly resistant to chemicals, as the tube to be incorporated in the tube pump and the pinch valve.

However, the fluororubber is highly adhesive after being crosslinked. Therefore, a longer period of time is required for the restoration of the tube from the collapsed state to the original state by the intrinsic resilience and restorability of the tube after the tube is released from the pressing.

Therefore, for example, the tube pump is liable to have a reduced fluid transportability, thereby failing to promptly feed out a minute amount of fluid. The pinch valve is liable to have a reduced open/close responsiveness.

To cope with this, it is proposed to form a coating film made, for example, of a fluororesin on the inner surface of the fluororubber tube defining the flow channel, for example, for suppression of the adhesiveness (Patent Document 1 and Patent Document 2).

### [CITATION LIST]

### [PATENT DOCUMENT]

[PATENT DOCUMENT 1] JP2002-502735A
[PATENT DOCUMENT 2] JP2008-30471A

### [SUMMARY OF THE INVENTION]

### [PROBLEM TO BE SOLVED BY THE INVENTION]

The aforementioned arrangement is liable to complicate the structure of the tube and the production process of the tube.

Further, the formed coating film is liable to be worn or peeled off in a shorter period of time due to friction of fluid flowing through the flow channel and solid particles contained in the fluid, resulting in contamination of the fluid.

It is an object of the present invention to provide a fluororubber tube which is made less tacky by suppressing the intrinsic adhesiveness of a crosslinked fluororubber without the formation of the coating film which may otherwise complicate the tube structure and the tube production process or may result in contamination of the fluid. Thus, the fluororubber tube is improved in fluid transportability, for example, when being used for a tube pump, and is improved in open/close responsiveness when being used for a pinch valve.

### [SOLUTION TO PROBLEM]

According to the present invention, there is provided a fluororubber tube formed from a rubber composition containing a fluororubber, not less than 3.8 parts by mass and not greater than 4.1 parts by mass of a polyol crosslinking agent, and not less than 3 parts by mass and not greater than 7 parts by mass of a carbon black based on 100 parts by mass of the fluororubber, wherein the polyol crosslinking agent is a mixture of a bisphenol and an accelerating agent for accelerating a crosslinking reaction of the fluororubber with the bisphenol.

### [EFFECTS OF THE INVENTION]

According to the present invention, the fluororubber tube is made less tacky by suppressing the intrinsic adhesiveness of the crosslinked fluororubber without the formation of the coating film which may otherwise complicate the tube structure and the tube production process, or may result in contamination of the fluid. Thus, the fluororubber tube is improved in fluid transportability, for example, when being used for a tube pump, and is improved in open/close responsiveness when being used for a pinch valve.

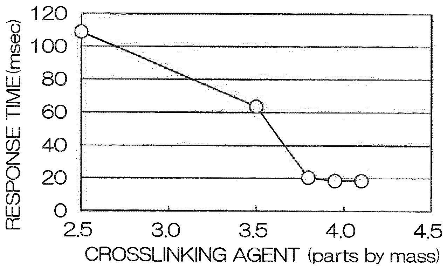

### [BRIEF DESCRIPTION OF THE DRAWING]

FIGURE is a graph showing a relationship between the proportion of a polyol crosslinking agent and the response time of a pinch valve in the inventive examples and comparative examples.

### [EMBODIMENTS OF THE INVENTION]

### <Fluororubber Tube>

The inventive fluororubber tube is formed from a rubber composition containing a fluororubber, not less than 3.8 parts by mass and not greater than 4.1 parts by mass of a polyol crosslinking agent, and not less than 3 parts by mass and not greater than 7 parts by mass of a carbon black based on 100 parts by mass of the fluororubber.

As apparent from the results for the Examples and Comparative Examples to be described later, where the proportion of the polyol crosslinking agent falls within the aforementioned range according to the present invention, the fluororubber has an increased crosslinking density after being crosslinked and hence is suppressed in adhesiveness, whereby the fluororubber tube can be made less tacky without the formation of the coating film which may otherwise complicate the structure of the tube and the production process of the tube or may result in contamination of the fluid.

According to the present invention, where the proportion of the polyol crosslinking agent and the proportion of a carbon black respectively fall within the aforementioned corresponding ranges, the fluororubber tube produced by the crosslinking is substantially prevented from reduction in flexibility which may otherwise occur due to the increase in the crosslinking density of the fluororubber. Thus, the fluororubber tube has a proper flexibility.

Therefore, the fluororubber tube formed from the rubber composition is improved in fluid transportability when being used for a tube pump, and is improved in open/close responsiveness when being used for a pinch valve.

### (Fluororubber)

Examples of the fluororubber include vinylidene fluoride rubbers (FKM) such as vinylidene fluoride-trifluorochloroethylene bipolymers, vinylidene fluoride-hexafluoropropylene bipolymers and vinylidene fluoride-hexafluoropropylene-tetrafluoroethylene terpolymers, tetrafluoroethylene-propylene rubbers (FEPM), and tetrafluoroethylene-perfluorovinyl ether rubbers (FFKM), which each contain fluorine atoms in a molecule thereof, and are crosslinkable by the polyol crosslinking agent and capable of exhibiting elasticity when being crosslinked. These fluororubbers may be used alone or in combination.

Particularly, the vinylidene fluoride rubbers are preferred, because they are excellent in versatility and handleability and the resulting fluororubber tube is excellent in elasticity, wear resistance, tensile strength and the like.

The fluororubber is provided in a pre-compound form which contains the polyol crosslinking agent preliminarily added thereto or in a raw rubber form which does not contain the polyol crosslinking agent. In the present invention, either form of the fluororubber is usable.

Specific examples of the polyol-crosslinkable pre-compound vinylidene fluoride fluororubber include DuPont Elastomer's VITON (registered trade name) Series A201C, A401C, B601C and F605C, which may be used alone or in combination.

Specific examples of the polyol-crosslinkable raw vinylidene fluoride fluororubber include DuPont Elastomer's VITON Series A200, A500, A700, AHV, AL300, AL600, B202 and B600, which may be used alone or in combination.

### (Polyol Crosslinking Agent)

An example of bisphenol included in the polyol crosslinking agent according to the present invention is bisphenol AF (2,2-bis(4-hydroxyphenyl)-hexafluoropropane). Such a bisphenol may be blended with the fluororubber to provide a master batch.

According to the present invention, a mixture of the bisphenol and an accelerating agent for accelerating a crosslinking reaction of the fluororubber with the bisphenol is used as the polyol crosslinking agent.

The mixture may be, for example, a salt mixture containing bisphenol AF and benzyltriphenylphosphonium chloride at a mass ratio of about 4/1 (DuPont Elastomer's VC-50).

The proportion of the polyol crosslinking agent should be not less than 3.8 parts by mass and not greater than 4.1 parts by mass based on 100 parts by mass of the fluororubber as described above.

If the proportion of the polyol crosslinking agent is less than the aforementioned range, it will be impossible to provide the effect of suppressing the adhesiveness of the crosslinked fluororubber. Therefore, a longer period of time will be required for the restoration of the tube from the collapsed state to the original state by the intrinsic resilience and restorability of the tube after the tube is released from pressing.

Thus, where the fluororubber tube is used for a tube pump, for example, the ability to transport fluid will be reduced, making it impossible to promptly feed out a minute amount of fluid. Where the fluororubber tube is used for a pinch valve, the open/close responsiveness will be reduced.

Even if the proportion of the polyol crosslinking agent is greater than the aforementioned range, on the other hand, it will be impossible to enhance the effect, but the crosslinked fluororubber is liable to have an excessively high crosslinking density and hence a significantly reduced flexibility. This will make it impossible to demold the fluororubber tube, for example, when the fluororubber tube is produced by press molding with the use of a mold conformal to the tube.

Where the proportion of the polyol crosslinking agent falls within the aforementioned range, in contrast, it is possible to minimize the adhesiveness of the fluororubber, while suppressing the reduction in the flexibility of the fluororubber due to excessively high crosslinking density of the fluororubber. Therefore, the fluororubber tube is improved in fluid transportability when being used for a tube pump, and is improved in open/close responsiveness when being used for a pinch valve.

For further improvement of the effect, the proportion of the polyol crosslinking agent is preferably not less than 3.9 parts by mass, particularly preferably not less than 3.95 parts by mass, based on 100 parts by mass of the fluororubber within the aforementioned range.

Where the master batch is used, the proportion of the polyol crosslinking agent equals to the proportion of the polyol crosslinking agent contained in the master batch.

Where the pre-compound fluororubber is used, the polyol crosslinking agent may be added to the pre-compound fluororubber so that the amount of the additional polyol crosslinking agent plus the amount of the polyol crosslinking agent contained in the pre-compound fluororubber falls within the aforementioned range.

### (Carbon Black)

A variety of carbon blacks functioning as a reinforcing agent and a filler for the fluororubber are usable as the carbon black.

As described above, the proportion of the carbon black should be not less than 3 parts by mass and not greater than 7 parts by mass based on 100 parts by mass of the fluororubber.

If the proportion of the carbon black is less than the aforementioned range, it will be impossible to provide the function of the carbon black as the reinforcing agent and the filler, thereby reducing the strength of the fluororubber tube.

Even if the proportion of the carbon black is greater than the aforementioned range, it will be impossible to enhance the effect, but the flexibility of the crosslinked fluororubber will be significantly reduced. This will make it impossible to demold the fluororubber tube, for example, when the fluororubber tube is produced by press molding with the use of the mold conformal to the tube.

Where the proportion of the carbon black falls within the aforementioned range, in contrast, it is possible to impart the fluororubber tube with a proper strength, while suppressing the reduction in the flexibility of the fluororubber due to excessively high crosslinking density of the fluororubber.

For further improvement of this effect, the proportion of the carbon black is preferably not less than 5 parts by mass based on 100 parts by mass of the fluororubber within the aforementioned range.

### (Other Ingredients)

The rubber composition may further contain an acceleration assisting agent, an acid accepting agent, a processing aid, and the like.

A preferred example of the acceleration assisting agent is calcium hydroxide. The proportion of the calcium hydroxide is preferably not less than 3 parts by mass and not greater than 10 parts by mass based on 100 parts by mass of the fluororubber.

Examples of the acid accepting agent include magnesium salts such as magnesium oxide, and lead oxide (litharge). The proportion of the acid accepting agent is preferably not less than 1 part by mass and not greater than 5 parts by mass based on 100 parts by mass of the fluororubber.

Examples of the processing aid include various waxes. Carnauba waxes of various grades are particularly preferred. The proportion of the processing aid is preferably not less than 0.5 parts by mass and not greater than 5 parts by mass based on 100 parts by mass of the fluororubber.

### (Forming and Crosslinking)

The fluororubber tube is produced in a conventional manner by forming the rubber composition containing the aforementioned ingredients into a tubular body, and crosslinking the tubular body.

Exemplary methods for the forming step include a press molding method, an extrusion method, a transfer molding method and an injection molding method. In the press molding method and the transfer molding method, the forming step and the crosslinking step are simultaneously performed to form and thermally crosslink the rubber composition to produce the fluororubber tube. The tubular body formed by any of the other forming methods may be crosslinked in a vulcanization can.

The fluororubber tube produced by simultaneously performing the forming step and the (primary) crosslinking step by the press molding method or the transfer molding method may be further secondarily crosslinked after demolding thereof.

Conditions for the forming step and the crosslinking step may be set as desired.

As described above, the inventive fluororubber tube is suitable for use in a tube pump and a pinch valve.

### [EXAMPLES]

### <Example 1>

A rubber composition was prepared by blending and kneading together 100 parts by mass of a polyol-crosslinkable raw vinylidene fluoride fluororubber (DuPont Elastomer's VITON A700), 5 parts by mass of carbon black (MT CARBON), 6 parts by mass of calcium hydroxide, 3 parts by mass of magnesium oxide and 3.8 parts by mass of a polyol crosslinking agent (DuPont Elastomer's VC-50, a salt mixture containing bisphenol AF and benzyltriphenylphosphonium chloride at a mass ratio of about 4/1).

Then, the rubber composition thus prepared was fed into a mold, and press-molded into a tube form and primarily crosslinked at 177°C. The resulting tube was demolded, and heated at 232°C for 24 hours for secondary crosslinking. Thus, a fluororubber tube having an inner diameter of 1 mm and an outer diameter of 2 mm was produced.

### <Examples 2 and 3 and Comparative Examples 1 and 2>

Fluororubber tubes were produced in substantially the same manner as in Example 1, except that the proportion of the polyol crosslinking agent was 2.5 parts by mass (Comparative Example 1), 3.5 parts by mass (Comparative Example 2), 3.95 parts by mass (Example 2) and 4.1 parts by mass (Example 3) based on 100 parts by mass of the fluororubber.

### <Examples 4 and 5>

Fluororubber tubes of Example 4 and Example 5 were produced in substantially the same manner as in Example 1 and Example 3, respectively, except that the proportion of carbon black was 7 parts by mass based on 100 parts by mass of the fluororubber.

### <Comparative Example 3>

An attempt was made to produce a fluororubber tube in substantially the same manner as in Example 1 except that the proportion of the polyol crosslinking agent was 4.3 parts by mass. However, it was impossible to demold the press-molded product.

### <Comparative Examples 4 and 5>

An attempt was made to produce fluororubber tubes of Comparative Example 4 and Comparative Example 5 in substantially the same manner as in Comparative Example 2 and Example 1, respectively, except that the proportion of the carbon black was 10 parts by mass based on 100 parts by mass of the fluororubber. However, it was impossible to demold the press-molded products.

### <Measurement of Response Time>

The fluororubber tubes produced in Examples 1 to 5 and Comparative Examples 1 and 2 were each combined with a solenoid-driven opening/closing mechanism, whereby a pinch valve was produced. The fluororubber tube was connected at one end (inlet end) thereof to an air supply portion, and connected at the other end (outlet end) thereof to a pressure gauge.

Then, the opening/closing mechanism was operated to press a part of the fluororubber tube diametrically, whereby an internal flow channel was collapsed to be closed. In this state, an air pressure of 100 kPa was applied to the inlet end of the fluororubber tube, and a response time was measured, which was defined as a time period elapsed from a time point at which the opening/closing mechanism was operated to release the fluororubber tube from the pressing to a time point at which the flow channel of the fluororubber tube was actually opened and a predetermined pressure level was detected by the pressure gage provided at the outlet end.

The results are shown in Tables 1 and 2. The results for Examples 1 to 3 and Comparative Examples 1 and 2 are also shown in FIGURE.

**Table 1**

| | Comparative Example 1 | Comparative Example 2 | Example 1 | Example 2 | Example 3 | Comparative Example 3 |
|---|---|---|---|---|---|---|
| Polyol crosslinking agent (parts by mass) | 2.5 | 3.5 | 3.8 | 3.95 | 4.1 | 4.3 |
| Carbon black (parts by mass) | 5 | 5 | 5 | 5 | 5 | 5 |
| Response time (msec) | 108.8 | 63.5 | 20.5 | 18.5 | 18.5 | Impossible to demold |

**Table 2**

| | Example 4 | Example 5 | Comparative Example 4 | Comparative Example 5 |
|---|---|---|---|---|
| Polyol crosslinking agent (parts by mass) | 3.8 | 4.1 | 3.5 | 3.8 |
| Carbon black (parts by mass) | 7 | 7 | 10 | 10 |
| Response time (msec) | 27.5 | 27.1 | Impossible to demold | Impossible to demold |

The results for Examples 1 to 5 and Comparative Examples 1 to 5 shown in Tables 1 and 2 and FIGURE indicate that the proportion of the polyol crosslinking agent should be not less than 3.8 parts by mass, and is preferably not less than 3.9 parts by mass, particularly preferably not less than 3.95 parts by mass, based on 100 parts by mass of the fluororubber in order to suppress the adhesiveness of the crosslinked fluororubber to improve the open/close responsiveness of the fluororubber tube when the fluororubber tube is used for a pinch valve or the like.

The results also indicate that the proportion of the polyol crosslinking agent should be not greater than 4.1 parts by mass based on 100 parts by mass of the fluororubber within the aforementioned range in order to suppress the reduction in the flexibility of the fluororubber tube due to excessively high crosslinking density of the crosslinked fluororubber to permit proper demolding of the fluororubber tube, for example, after the press molding or the like.

The results also indicate that the proportion of the carbon black should be not less than 3 parts by mass and not greater than 7 parts by mass, and is preferably not less than 5 parts by mass, based on 100 parts by mass of the fluororubber in order to provide the aforementioned effect and suppress the reduction in the flexibility of the fluororubber tube to permit proper demolding of the fluororubber tube.

## Claims

1. A fluororubber tube formed from a rubber composition **characterized by** comprising a fluororubber, and not less than 3.8 parts by mass and not greater than 4.1 parts by mass of a polyol crosslinking agent and not less than 3 parts by mass and not greater than 7 parts by mass of a carbon black based on 100 parts by mass of the fluororubber, wherein the polyol crosslinking agent is a mixture of a bisphenol and an accelerating agent for accelerating a crosslinking reaction of the fluororubber with the bisphenol.

2. The fluororubber tube according to claim 1, **characterized in that** the fluororubber is a vinylidene fluoride rubber.

3. The fluororubber tube according to claim 1 or 2, **characterized in that** the polyol crosslinking agent is a salt mixture of bisphenol AF and a benzyltriphenylphosphonium salt.

4. The fluororubber tube according to any one of claims 1 through 3, which is used for a tube pump or a pinch valve.

## Patentansprüche

1. Fluorkautschukschlauch, gebildet aus einer Kautschukzusammensetzung, **dadurch gekennzeichnet, dass** sie einen Fluorkautschuk und nicht weniger als 3,8 Massenteile und nicht mehr als 4,1 Massenteile eines Polyol-Vernetzungsmittels und nicht weniger als 3 Massenteile und nicht mehr als 7 Massenteile eines Rußes umfasst, bezogen auf 100 Massenteile des Fluorkautschuks, wobei das Polyol-Vernetzungsmittel ein Gemisch eines Bisphenols und eines Beschleunigungsmittels zum Beschleunigen einer Vernetzungsreaktion des Fluorkautschuks mit dem Bisphenol ist.

2. Fluorkautschukschlauch nach Anspruch 1, **dadurch gekennzeichnet, dass** der Fluorkautschuk ein Vinylidenfluorid-Kautschuk ist.

3. Fluorkautschukschlauch nach Anspruch 1 oder 2, **dadurch gekennzeichnet, dass** das Polyol-Vernetzungsmittel ein Salzgemisch von Bisphenol AF und eines Benzyltriphenylphosphoniumsalzes ist.

4. Fluorkautschukschlauch nach einem der Ansprüche 1 bis 3, der für eine Schlauchpumpe oder ein Quetschventil verwendet wird.

## Revendications

1. Tube de caoutchouc fluoré formé à partir d'une composition de caoutchouc **caractérisée en ce qu'**elle comprend un caoutchouc fluoré, et pas moins de 3,8 parts en masse et pas plus de 4,1 parts en masse d'un agent de réticulation de polyol et pas moins de 3 parts en masse et pas plus de 7 parts en masse d'un noir de carbone sur la base de 100 parts en masse du caoutchouc fluoré, dans lequel l'agent de réticulation de polyol est un mélange d'un bisphénol et d'un agent d'accélération destiné à accélérer une réaction de réticulation du caoutchouc fluoré avec le bisphénol.

2. Tube de caoutchouc fluoré selon la revendication 1, **caractérisé en ce que** le caoutchouc fluoré est un caoutchouc à base de fluorure de vinylidène.

3. Tube de caoutchouc fluoré selon la revendication 1 ou 2, **caractérisé en ce que** l'agent de réticulation de polyol est un mélange à base de sel constitué de bisphénol AF et d'un sel de benzyltriphénylphosphonium.

4. Tube de caoutchouc fluoré selon l'une quelconque des revendications 1 à 3, qui est utilisé pour une pompe à tube ou une valve à pincement.
